Europäisches Patentamt

(19) **European Patent Office**

**Office européen des brevets**

(11) Publication number: **0 041 501**
**B1**

(12) **EUROPEAN PATENT SPECIFICATION**

(45) Date of publication of patent specification: **30.09.87**

(51) Int. Cl.⁴: **G 01 M 15/00**

(21) Application number: **80900941.8**

(22) Date of filing: **03.12.79**

(86) International application number:
**PCT/US79/01084**

(87) International publication number:
**WO 81/01613 11.06.81 Gazette 81/14**

(54) **PIEZOELECTRIC TRANSDUCER FOR FUEL INJECTION ENGINE.**

(43) Date of publication of application:
**16.12.81 Bulletin 81/50**

(45) Publication of the grant of the patent:
**30.09.87 Bulletin 87/40**

(84) Designated Contracting States:
**CH DE FR GB LU NL SE**

(56) References cited:
**DE-A-2 647 402**
**DE-A-2 936 695**
**DE-A-2 937 882**
**GB-A-1 389 408**
**US-A-3 898 885**

(73) Proprietor: **YELKE, Edward**
**945 South Kensington**
**LaGrange, IL 60525 (US)**

(72) Inventor: **YELKE, Edward**
**945 South Kensington**
**LaGrange, IL 60525 (US)**

(74) Representative: **Groening, Hans Wilhelm, Dipl.-Ing.**
**Patentanwälte Strehl Schübel-Hopf Groening**
**Schulz Widenmayerstrasse 17 Postfach 22 03 45**
**D-8000 München 22 (DE)**

Courier Press, Leamington Spa, England.

EP 0 041 501 B1

## Description

Technical Field

The present invention relates generally to a system for aiding in the timing of a fuel injection engine; and more particularly, to such a system including a piezoelectric transducer mounted on the fuel line for an engine cylinder for monitoring and sensing the fuel injection into the engine. The transducer according to the invention may also be conveniently utilized to determine engine RPM.

Background Prior Art

A pressure transducer for sensing the injection of fluid through a tubular line, shown in U.S. Patent No. 3,898,885 comprises a clamp formed essentially as a flexible collar designed to be mounted around the line and discrete sections comprising piezoelectric material, said sections being positioned on the inner surface of the collar and being arranged to bear against the line around the circumference of said line, whereby each section generates an electric signal dependent on the pressure exerted on the line by the fluid passing through the line.

In the type of sensor known in the state of art noise is a serious problem. U.S. Patent No. 3,989,885 proposes to solve the problem by providing four transducers whose outputs cancel each other. Furthermore, it is pointed out in the state of art, how damping of vibration is achieved by frictional engagement of body members with side plates. Moreover, the radial expansion of the fuel line is transduced to the piezoelectric elements through passive parts in only one radial direction perpendicular to the surface of the piezoelectric wavers.

Summary of the Invention

Accordingly, it is the principal object of the present invention to provide a new and improved device for monitoring and sensing the charge of a fuel applied to a fuel injection engine.

It is another object of the present invention to provide a fuel injection monitoring and sensing device which is reliable in operation and provides a satisfactory signal representative of the fuel being injected to the associated engine, and which signal may be detected over engine vibrations and spurious noise.

It is another object of the present invention to provide a fuel injection monitoring and sensing device which may be conveniently mounted on a fuel injection line either in original manufactured equipment (OEM) or as a retrofitted device.

These objects are achieved by the transducer defined in Claim 1. The inventive device is preferably in the form of a split collar with a piezoelectric material positioned in circular configuration in the inside surface of the collar. When the collar is mounted on the fuel line, the piezoelectric crystal material is positioned adjacent to and against the exterior surface of the fuel line whereby any expansion of the fuel line due to fuel being forced therethrough is sensed by the piezoelectric material. As is known, the piezoelectric material converts this pressure into a voltage which may be coupled out to a suitable circuit.

Description of the Drawings

FIGURE 1 is a sketch of a side elevation of a diesel engine with the inventive pressure transducer shown mounted on a fuel injection line;

FIGURE 2 is an isometric drawing substantially to scale of one embodiment of the applicant's pressure transducer mounted on a fuel injection line;

FIGURE 3 is a plan view of the pressure transducer of FIGURE 2;

FIGURE 4 is a waveform showing the electrical signal output of the inventive pressure transducer;

FIGURE 5 is a plan view of a second embodiment of the inventive transducer;

FIGURE 6 is a sketch showing the pressure transducer connected to an electronic circuit; and,

FIGURE 7 is a plan view of a third embodiment of the inventive transducer.

Description of the Preferred Embodiment of the Invention

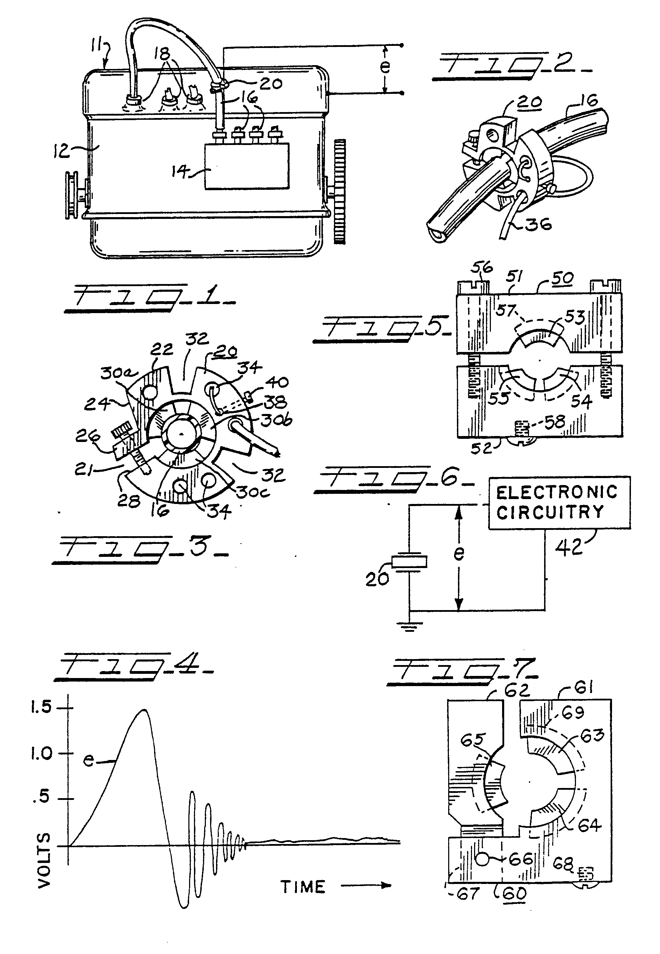

Refer first to FIGURE 1 which shows an internal combustion engine of the diesel type represented by the reference numeral 11 and comprising an engine block 12 having a plurality of cylinders. A fuel injection pump housing 14 on the engine block has a number of fuel injection lines 16 connecting through injection nozzles 18 to respective cylinders as is known in the art.

A pressure transducer 20 according to the invention is mounted on a fuel injection line 16. The fuel injection line 16 is formed of metallic tubing of sufficient strength to withstand the high injection pressures utilized in diesel engines. As is known, the tubing of line 16 will expand as the fuel under pressure passes through the line. As will be explained hereinbelow, the transducer 20 develops an electrical signal responsive to the fuel injection. Such signal may be used for engine timing purposes since there is a desired relation of the time of fuel injection into the cylinder with respect to the instantaneous position of the associated piston.

As noted above, various prior art systems have been proposed to sense the timing of the fuel injection to an engine; however, these prior art systems have been found to have limited usage, primarily, it is believed, because they are not entirely reliable and because engine vibration gives rise to unreliable readings.

Refer now to FIGURES 2 and 3 which show in clear detail the inventive pressure transducer. In FIGURE 2, the inventive transducer 20 is shown in essentially actual size as mounted on an injection line 16. The transducer 20 is formed as a split collar 22 which can be opened as at 21 for mounting onto injection line 16. Collar 22 includes a peripherally recessed portion 24 which forms a flange 26 as one open edge of the collar. Flange 26 is threaded for receiving a machine screw which tightens flange 26 against the opposing edge of surface 28 of the collar. A piezoelectric crystal material generally labeled 30 is adhered such as by gluing onto the inside surface of the collar 22.

In the embodiment shown, the piezoelectric material 30 is formed as three spaced contoured sections 30a, 30b, and 30c for accommodating to the inside surface collar 20 and to the outside surface of the fuel line 16. The multiple contacts of the piezoelectric material directly to the line 16 provided by the three sections 30a, 30b, and 30c tend to maximize the output signal while minimizing noise.

Additionally, note that in the preferred embodiment the outside diameter of the collar 22 is slit to form gaps 32 therein in spaced relation around its periphery, and apertures 34 are drilled through the planar surface of the collar. The purpose of the foregoing is to reduce the overall mass of the collar to enhance the signal developed by the piezoelectric material 30 and to minimize noise pickup due to engine vibrations.

An electrical conductor 36 is inserted through two of the apertures 34 and has its end inserted in a radially directed hole 38. A screw 40 electrically and mechanically affixes conductor 36 to collar 22 in hole 38.

As is known, a change in size of line 16, that is, the expansion of line 16 due to pressure induced stress occurs when fuel under pressure is injected therethrough causing a change in pressure applied to the piezoelectric material 30 which converts or transforms the pressure to an electrical potential or signal "e". The signal "e" is obtained by transducer 20 as is shown in FIGURE 4 and comprises a waveform having a steeply rising leading edge and steeply falling trailing edge which then dampens to zero. The waveform rises to an amplitude of about 1.5 volts in the order of milliseconds dependent on the pressure developed by the fuel passing through the line. The steepness of the leading edge is dependent on the nozzle opening and the start of the fuel injection into the cylinder. The ringing effect of waveform "e" is caused by fluid reflections within the line. The amplitude of the ringing, or conversely the rate at which the waveform "e" is damped, varies greatly with engine speed and engine load characteristics. As indicated in FIGURE 6 the signal "e" is coupled to electronic circuitry 42 of any suitable known design to be processed such as to provide timing, RPM, volume of fuel injected information and pollution control information.

FIGURE 5 shows a second embodiment of the inventive transducer. As can be clearly seen from the drawing, the transducer 50 comprises two similar portions 51 and 52 each having a semicircular center conforming to the diameter of the associated fuel line, not shown, and the portions 51 and 52 are affixed to one another around the fuel line by suitable screw 56. Contoured sections 53, 54 and 55 of piezoelectric material are positioned in respective recesses generally labeled 57 in portions 51 and 52 in a position to bear against the surface of the fuel line. The small screw 58 provides a means for connecting an electrical wire to the transducer 50.

FIGURE 7 shows a third embodiment of the inventive transducer. The transducer 60 of FIGURE 7 comprises a base 61 and an arm 62 which may be positioned and locked or clamped to in a suitable recess or groove 67 in base 61 as by a bolt or pin 66. The contoured sections 63, 64 and 65 of piezoelectric material are positioned in respective recesses generally labeled 69 in base 61 and arm 62 to bear against the surface of the associated fuel line, not shown. Screw 68 provides a means for connecting an electrical wire to the transducer 60.

The operation of the embodiments of the transducers 50 and 60 shown in FIGURES 5 and 7 respectively are essentially the same as that of the transducer 20 shown in FIGURES 2 and 3. It should be noted, that when the transducers 20, 50 and 60 are installed on a fuel line, the piezoelectric sections of each of the transducers will be in direct operating contact with the fuel line.

Note also that although three piezoelectric sections such as 30a, 30b and 30c in transducer 20 have been found to provide an excellent output signal, it should be appreciated that more or fewer discrete sections of piezoelectric material may be used in the transducers shown.

**Claims**

1. A pressure transducer for sensing the injection of fluid through a tubular line (16) comprising:
a clamp (20, 50, 60) formed essentially as a flexible collar designed to be mounted around the line; and
discrete sections (30a, 30b, 30c; 53, 54, 55; 63, 64, 65) comprising piezoelectric material, said sections being positioned on the inner surface of the collar and being arranged to bear against the line around the circumference of said line, whereby each section generates an electric signal dependent on the pressure exerted on the line by the fluid passing through the line, and an electric connector (36, 58, 68) connecting said piezoelectric material sections to associated electronic circuitry, characterized in that said sections consist of members containing only piezoelectric material and having their radially inner surfaces contoured to the circumferential contour of the line to bear immediately against a part of the surface of the line.

2. A pressure transducer as in Claim 1 wherein said collar (20) is formed of an integral piece of flexible material provided with a slot (21) to allow opening of the collar.

3. The transducer as in Claim 1 wherein said sections comprise three separate members (30a, 30b, 30c; 53, 54, 55; 63, 64, 65) positioned in spaced relationship around the circumference of said tubular line.

4. A transducer as in any one of Claims 1—3 wherein gaps (32) are formed on the periphery of said collar (20), and apertures (34) are drilled through said collar to reduce the mass thereof to enhance the signal output of the transducer material and to minimize the susceptibility of the collar to engine vibration.

## Patentansprüche

1. Druckwandler zum Abtasten der Injektion von Flüssigkeit durch eine rohrförmige Leitung (16) mit einer Klemme (20, 50, 60), die im wesentlichen als flexibler Kranz ausgebildet ist, der dazu vorgesehen ist, um die Leitung herum montiert zu werden, diskrete Teile (30a, 30b, 30c; 53, 54, 55; 63, 64, 65), die piezoelektrisches Material enthalten, wobei diese Teile so an der inneren Oberfläche des Kranzes angeordnet und so ausgebildet sind, daß sie sich an der Leitung entlang ihres Umfanges abstützen, wodurch jedes Teil ein elektrisches Signal erzeugt, das von dem Druck abhängt, der auf die Leitung durch die Leitung durchtretende Flüssigkeit ausgeübt wird, und mit einem elektrischen Leiter (36, 58, 68), der die Teile aus piezoelektrischem Material mit einer zugeordneten elektronischen Schaltung verbindet, dadurch gekennzeichnet, daß die Teile aus Bauelementen bestehen, die im wesentlichen nur piezoelektrisches Material enthalten und deren radiale innere Oberflächen an die Außenkontur der Leitung angepaßt sind, so daß sie unmittelbar gegen einen Teil der Oberfläche der Leitung andrücken.

2. Druckwandler nach Anspruch 1, bei dem der Kranz (20) aus einem einteiligen Stück aus flexiblem Material gebildet ist, das mit einem Schlitz (21) versehen ist, um ein Öffnen des Kranzes zu erlauben.

3. Wandler nach Anspruch 1, bei dem die Teile drei getrennte Bauelemente (30a, 30b, 30c; 53, 54, 55; 63, 64, 65) aufweisen, die im Abstand entlang dem Umfang der röhrenförmigen Leitung angeordnet sind.

4. Wandler nach einem der Ansprüche 1 bis 3, bei dem Aussparungen (32) in den Außenumfang des Kranzes (20) eingeformt und Löcher (34) durch den Kranz gebohrt sind, um dessen Masse zu reduzieren, den Signalausgang des Wandlermaterials zu verbessern und die Empfindlichkeit des Kranzes gegenüber Maschinenvibrationen zu minimieren.

## Revendications

1. Un transducteur de pression pour capter l'injection d'un fluide dans une conduite tubulaire (16), comprenant:
— une bride (20, 50, 60), essentiellement en forme de collier souple conçu pour être monté autour de la conduite,
— des parties distinctes (30a, 30b, 30c; 53, 54, 55; 63, 64, 65) comprenant un matériau piézoélectrique, ces parties étant placées sur la surface intérieure du collier et étant disposées de manière à porter sur la conduite sur toute la circonférence de celle-ci, de sorte que chaque partie produise un signal électrique fonction de la pression exercée sur la conduite par le fluide traversant la conduite, et
— un connecteur électrique (36, 58, 68) reliant les parties de matériau piézoélectrique à des circuits électroniques associés,
caractérisé en ce que ces parties consistent en des organes ne contenant que le matériau piézoélectrique et ayant leurs surfaces radialement intérieures se conformant au contour circonférenciel de la conduite de manière à porter directement sur une partie de la surface de la conduite.

2. Le transducteur de pression de la revendication 1, dans lequel le collier (20) est formé d'une pièce monobloc de matière souple pourvue d'une fente (21) permettant l'ouverture du collier.

3. Le transducteur de la revendication 1, dans lequel lesdites parties comprennent trois organes séparés (30a, 30b, 30c; 53, 54, 55; 63, 64, 65) placés à distance l'un de l'autre sur toute la circonférence de la conduite tubulaire.

4. Le transducteur de l'une quelconque des revendications 1 à 3, dans lequel des ouvertures (32) sont formées à la périphérie du collier (20) et des ouvertures (34) sont percées dans le collier de manière à réduire la masse ce celui-ci afin de renforcer le signal de sortie du matériau transducteur et de minimiser la sensibilité du collier aux vibrations du moteur.

FIG-2.

FIG-1.

FIG-5.

FIG-3.

FIG-6.

ELECTRONIC
CIRCUITRY

FIG-4.

FIG-7.

VOLTS

TIME